# EUROPEAN PATENT APPLICATION

(11) **EP 4 184 607 A1**
(43) Date of publication of application: **24.05.2023**
(21) Application number: 21866624.6
(22) Date of filing: 01.09.2021
(51) Int. Cl.: H01M 4/13, H01M 4/133, H01M 4/1393, H01M 4/587, H01M 4/62, H01M 10/052, H01M 10/0562

(54) **NONAQUEOUS-ELECTROLYTE SECONDARY BATTERY NEGATIVE ELECTRODE AND NONAQUEOUS-ELECTROLYTE SECONDARY BATTERY**

(30) Priority: 11.09.2020 JP 2020152504
(71) Applicant: Maxell, Ltd., Kyoto 618-8525 (JP)
(72) Inventor: NISHIMURA, Masaki, Otokuni-gun, Kyoto 618-8525 (JP); FURUKAWA, Kazuki, Otokuni-gun, Kyoto 618-8525 (JP); KAMIZORI, Haruki, Otokuni-gun, Kyoto 618-8525 (JP)
(74) Representative: Diehl & Partner
(86) International application number: PCT/JP2021/032103
(87) International publication number: WO 2022/054665

(57) **Abstract**

The present invention provides a negative electrode for a non-aqueous electrolyte secondary battery that has excellent charging load characteristics and a non-aqueous electrolyte secondary battery in which the negative electrode is used. The present invention is related to Goals 7 and 12 of the sustainable development goals (SDGs).

A negative electrode for a non-aqueous electrolyte secondary battery according to the present invention contains a negative electrode active material and a conductive aid. As the conductive aid, the negative electrode contains carbon nanotubes that have a fiber diameter of 0.8 to 20 nm and an aspect ratio of 5000 or more. Also, a non-aqueous electrolyte secondary battery according to the present invention includes a positive electrode and a negative electrode. As the negative electrode, the non-aqueous electrolyte secondary battery includes the negative electrode for a non-aqueous electrolyte secondary battery according to the present invention.

## Description

### Technical Field

The present invention relates to a negative electrode for a non-aqueous electrolyte secondary battery that has excellent charging load characteristics, and a non-aqueous electrolyte secondary battery in which the negative electrode is used.

### Background Art

In recent years, along with the development of portable electronic devices such as mobile phones and notebook personal computers, the practical application of electric vehicles, and the like, demand for secondary batteries that are small and lightweight and have a high capacity and a high energy density is increasing. By providing non-aqueous electrolyte secondary batteries to the public, it is possible to contribute to achieving, among 17 sustainable development goals (SDGs) adopted by the United Nations, Goal 7 (to ensure access to affordable, reliable, sustainable and modern energy for all) and Goal 12 (to ensure sustainable consumption and production patterns).

Currently, non-aqueous electrolyte secondary batteries that can meet the above-described demand are made using a lithium-containing composite oxide such as lithium cobalt oxide (LiCoO₂) or lithium nickel oxide (LiNiO₂) as a positive electrode active material, graphite or the like as a negative electrode active material, and an organic electrolyte solution that contains an organic solvent and a lithium salt as a non-aqueous electrolyte.

Also, for non-aqueous electrolyte secondary batteries, improvement has been made not only on the positive electrode active material and the negative electrode active material that are directly involved in battery reactions, but also on a conductive aid and the like for ensuring conductivity of the electrodes. For example, Patent Documents 1 to 3 propose the use of a fibrous conductive aid such as carbon nanotubes in the electrodes of non-aqueous electrolyte secondary batteries.

### Prior Art Documents

### Patent Document

[Patent Document 1] JP 2008-277128A
[Patent Document 2] JP 2011-243558A
[Patent Document 3] JP 2018-181707A

### Disclosure of Invention

### Problem to be Solved by the Invention

A non-aqueous electrolyte secondary battery is usually charged using a method in which charging is performed at a constant current until the battery voltage reaches a predetermined value (constant current charging) and thereafter charging is performed at a constant voltage until the current value decreases to a predetermined value (constant voltage charging). However, in order to increase, for example, fast charging characteristics of a non-aqueous electrolyte secondary battery, it is desirable that the negative electrode of the non-aqueous electrolyte secondary battery has a large capacity even when constant current charging is performed at a large current value, or in other words, high charging load characteristics.

The present invention has been made in view of the circumstances described above, and it is an object of the present invention to provide a negative electrode for a non-aqueous electrolyte secondary battery that has excellent charging load characteristics and a non-aqueous electrolyte secondary battery in which the negative electrode is used.

### Means for Solving Problem

A negative electrode for a non-aqueous electrolyte secondary battery according to the present invention is a negative electrode for a non-aqueous electrolyte secondary battery containing a negative electrode active material and a conductive aid, wherein the negative electrode contains carbon nanotubes that have a fiber diameter of 0.8 to 20 nm and an aspect ratio of 5000 or more as the conductive aid.

Also, a non-aqueous electrolyte secondary battery according to the present invention is a non-aqueous electrolyte secondary battery including a positive electrode and a negative electrode, wherein the non-aqueous electrolyte secondary battery includes the negative electrode for a non-aqueous electrolyte secondary battery according to the present invention as the negative electrode.

### Effects of the Invention

According to the present invention, it is possible to provide a negative electrode for a non-aqueous electrolyte secondary battery that has excellent charging load characteristics and a non-aqueous electrolyte secondary battery in which the negative electrode is used.

### Brief Description of Drawings

[FIG. 1] FIG. 1 is a schematic cross-sectional view showing an example of a non-aqueous electrolyte secondary battery according to the present invention.
[FIG. 2] FIG. 2 is a schematic plan view showing another example of a non-aqueous electrolyte secondary battery according to the present invention.
[FIG. 3] FIG. 3 is a cross-sectional view taken along the line I-I shown in FIG. 2.

### Description of the Invention

### Negative Electrode for Non-Aqueous Electrolyte Secondary Battery

The negative electrode for a non-aqueous electrolyte secondary battery according to the present invention contains a negative electrode active material and a conductive aid. As the conductive aid, the negative electrode contains carbon nanotubes that have a fiber diameter of 0.8 to 20 nm and an aspect ratio of 5000 or more.

The negative electrode for a non-aqueous electrolyte secondary battery expands and contracts significantly along with migration of Li (lithium) ions due to the battery being charged and discharged, and thus, for example, the contact area between the negative electrode active material and the conductive aid gradually decreases along with the repetition of charging and discharging, and a conductive path in the negative electrode is broken to reduce conductivity. This phenomenon becomes more prominent when the current value during charging is larger.

To address this, in the negative electrode for a non-aqueous electrolyte secondary battery according to the present invention, carbon nanotubes (CNTs) that have a fiber diameter of 0.8 to 20 nm and an aspect ratio of 5000 or more are used as the conductive aid. By using CNTs configured as described above, the strength of the negative electrode (that is made of a molded body obtained by molding a negative electrode material mixture that contains the negative electrode active material and the conductive aid, and includes a negative electrode material mixture layer formed on a current collector) is improved. As a result, in addition to suppressing the breakage of the conductive path due to the battery being charged and discharged, the conductivity between negative electrode active material particles is favorably maintained because the CNTs configured as described above are long. In the negative electrode for a non-aqueous electrolyte secondary battery according to the present invention, due to the effects of the CNTs configured as described above, even when, for example, the battery is charged at a large current value, the three-dimensional conductive network in the negative electrode can be favorably maintained.

Also, in an all-solid-state secondary battery in which Li ion conduction in the negative electrode is performed using a solid electrolyte instead of a non-aqueous electrolyte (non-aqueous electrolyte solution), the following problem is likely to occur: the contact area between the negative electrode active material and the solid electrolyte gradually decreases along with the variation in the volume of the negative electrode due to the battery being charged and discharged, which decreases the Li ion conductivity in the negative electrode. However, in the negative electrode for a non-aqueous electrolyte secondary battery according to the present invention, because the CNTs configured as described above are used, the strength of the negative electrode is improved. Accordingly, even when, for example, the battery is charged at a large current value, the Li ion conductivity in the negative electrode is also favorably maintained.

From the reasons described above, the negative electrode for a non-aqueous electrolyte secondary battery according to the present invention has high charging load characteristics.

The negative electrode for a non-aqueous electrolyte secondary battery may have a structure in which a molded body (a pellet or the like) obtained by molding a negative electrode material mixture that contains a negative electrode active material, a conductive aid, and the like, or a layer (negative electrode material mixture layer) made of the molded body of the negative electrode material mixture is formed on a current collector.

Examples of the negative electrode active material include a carbon material, an alloy that contains an element that can be alloyed with lithium such as Si or Sn, an oxide of Si, an oxide of Sn, metallic lithium, a lithium alloy (a lithium-aluminum alloy), and the like. These can be used alone or in a combination of two or more.

Examples of the carbon material that can be used as the negative electrode active material include graphite (including a natural graphite, an artificial graphite obtained by graphitizing easily-graphitizable carbon such as pyrolytic carbon, mesophase carbon microbeads, or carbon fibers at 2800°C or more, and the like), easily-graphitizable carbon (soft carbon), hardly-graphitizable carbon (hard carbon), pyrolytic carbon, cokes, glassy carbon, a sintered body of an organic polymer compound, mesophase carbon microbeads, carbon fibers, activated carbon, and the like.

Among these negative electrode active materials, because of having high Li ion acceptability, a large capacity, a relatively small variation in volume due to the battery being charged and discharged, and a high affinity for a solid electrolyte (described later) that may be used in the negative electrode, and being unlikely to cause deposition of Li dendrites, it is preferable to use hard carbon that is more advantageous in improving the charging load characteristics of the negative electrode for a non-aqueous electrolyte secondary battery.

In the case where hard carbon is used as the negative electrode active material, only hard carbon may be used, or a combination of hard carbon and another negative electrode active material may be used. In the case where a combination of hard carbon and another negative electrode active material is used, the proportion of hard carbon in the entire negative electrode active material is preferably 50 mass% or more. As described above, only hard carbon may be used as the negative electrode active material, and thus the upper limit value of the proportion of hard carbon in the entire negative electrode active material is preferably 100 mass%.

The amount of the negative electrode active material in the negative electrode material mixture is preferably 10 to 80 mass%.

As the conductive aid contained in the negative electrode for a non-aqueous electrolyte secondary battery, CNTs that have a specific fiber diameter and a specific aspect ratio are used.

The fiber diameter of the CNTs is preferably 20 nm or less, and more preferably 15 nm or less. The CNTs that have a fiber diameter within this range can be dispersed with a higher uniformity in the molded body of the negative electrode material mixture. Accordingly, the strength of the molded body can be improved, and a reduction in conductivity caused by the variation in volume of the negative electrode due to the battery being charged and discharged can be favorably suppressed. However, handleability decreases when the CNTs are too small, and thus the CNTs have a fiber diameter of preferably 0.8 nm or more, and more preferably 2 nm or more.

Also, the aspect ratio (represented by a value obtained by dividing the fiber length by the fiber diameter) of the CNTs is 5000 or more, and preferably 10000 or more. When the CNTs satisfy the fiber diameter and the aspect ratio within the above-described ranges, a favorable three-dimensional conductive network can be formed in the molded body of the negative electrode material mixture, and favorable conductivity is obtained in the molded body. There is no particular limitation on the upper limit value of the aspect ratio of the CNTs. However, the upper limit value of the aspect ratio of the CNTs is normally about 200000, and preferably 50000 or less.

The fiber diameter and the aspect ratio of the CNTs as used in the specification of the present application are values that are determined as follows. The fiber diameter of the CNTs is determined by measuring a width (shorter diameter) of a total of 10 CNTs, the width (shorter diameter) being the length in the widthwise direction of a CNT surface observation image, using a transmission electron microscope (TEM), and calculating the average value. Also, the aspect ratio of the CNTs is determined by dividing the average fiber length of the CNTs by the average fiber diameter of the CNTs. As used herein, the average fiber length of the CNTs is a value obtained by selecting 10 CNTs whose contour shape can be clearly seen in an observation image obtained by capturing the molded body of the negative electrode material mixture at a magnification of 100 to 4000 times using a scanning electron microscope (SEM) and averaging values of the 10 selected CNTs, each value obtained by measuring the maximum point-to-point distance on the outer circumference.

Also, the fiber length of the CNTs obtained using the method described above is preferably 50 µm or more, and more preferably 100 µm or more, and preferably 500 µm or less, and more preferably 300 µm or less.

The negative electrode for a non-aqueous electrolyte secondary battery (the molded body of the negative electrode material mixture) may contain, as the conductive aid, only CNTs (hereinafter also referred to as "the CNTs configured as described above") that have a fiber diameter and an aspect ratio that satisfy values within the above-described ranges, or may contain a different conductive aid together with the CNTs configured as described above. Examples of the different conductive aid that can be contained in the negative electrode together with the CNTs configured as described above include carbon black, graphene, and the like.

The amount of the CNTs configured as described above in the negative electrode material mixture is preferably 0.5 mass% or more, and more preferably 0.8 mass% or more from the viewpoint of favorably ensuring the advantageous effects obtained using the CNTs. However, when the amount of the CNTs that satisfy the above-described shape is too large, the effect of improving the charging load characteristics of the negative electrode for a non-aqueous electrolyte secondary battery may be reduced. Accordingly, the amount of the CNTs configured as described above in the negative electrode material mixture is preferably 2 mass% or less, and more preferably 1.8 mass% or less.

Also, in the case where the CNTs configured as described above and a different conductive aid are contained in the negative electrode, the total amount of the conductive aids in the negative electrode material mixture is preferably 11 mass% or less.

In the case where the negative electrode for a non-aqueous electrolyte secondary battery is used as the negative electrode of an all-solid-state secondary battery, a solid electrolyte is contained in the molded body of the negative electrode material mixture.

There is no particular limitation on the solid electrolyte as long as the solid electrolyte is lithium ion conductive. For example, a sulfide-based solid electrolyte, a hydride-based solid electrolyte, an oxide-based solid electrolyte, and the like can be used.

Examples of the sulfide-based solid electrolyte include Li₂S-P₂S₅-based glass particles, Li₂S-SiS₂-based glass particles, Li₂S-P₂S₅-GeS₂-based glass particles, Li₂S-B₂S₃-based glass particles, and the like. It is also possible to use an LGPS-based solid electrolyte (Li₁₀GeP₂S₁₂-based solid electrolyte or the like) and an argyrodite-type solid electrolyte (a solid electrolyte represented by Li_{7-x+y}PS₆₋ₓCl_{x+y}, where 0.05 ≤ y ≤ 0.9, and -3.0x + 1.8 ≤ y ≤ -3.0x + 5.7, such as Li₆PS₅Cl, a solid electrolyte represented by Li₇₋ₐPS₆₋ₐCl_{b}Br_{c}, where a = b + c, 0 < a ≤ 1.8, and 0.1 ≤ b/c ≤ 10.0, or the like) that are attracting attention as having a high lithium ion conductivity in recent years.

Examples of the hydride-based solid electrolyte include LiBH₄, a solid solution composed of LiBH₄ and any of the alkali metal compounds listed below (for example, a solid solution composed of LiBH₄ and an alkali metal compound at a molar ratio of 1:1 to 20:1), and the like. The alkali metal compound used to form the solid solution may be at least one selected from the group consisting of lithium halides (Lil, LiBr, LiF, LiCl, and the like), rubidium halides (RbI, RbBr, RbF, RbCl, and the like), cesium halides (CsI, CsBr, CsF, CsCl, and the like), lithium amides, rubidium amides, and cesium amides.

Examples of the oxide-based solid electrolyte include Li₇La₃Zr₂O₁₂, LiTi(PO₄)₃, LiGe(PO₄)₃, LiLaTiO₃, and the like.

Among these solid electrolytes, it is preferable to use a sulfide-based solid electrolyte because it is highly lithium ion conductive. It is more preferable to use a sulfide-based solid electrolyte that contains lithium and phosphorus, and it is even more preferable to use an argyrodite-type sulfide-based solid electrolyte that is particularly highly lithium ion conductive and chemically stable.

From the viewpoint of reducing the grain boundary resistance, the average particle size of the solid electrolyte used in the negative electrode for a non-aqueous electrolyte secondary battery is preferably 0.1 µm or more, and more preferably 0.2 µm or more. On the other hand, from the viewpoint of forming a sufficient contact interface between the negative electrode active material and the solid electrolyte, the average particle size of the solid electrolyte is preferably 10 µm or less, and more preferably 5 µm or less.

The term "average particle size" of various types of particles (the solid electrolyte, the positive electrode active material, and the like) used in the specification of the present application means a cumulative volume particle size (D₅₀) at 50% cumulative volume when integrated volume is determined in order from the particles with the smallest particle size using a particle size distribution measurement apparatus (Microtrack HRA9320 particle size distribution measurement apparatus available from Nikkiso Co., Ltd., or the like).

The amount of the solid electrolyte in the negative electrode material mixture is preferably 4 to 70 mass%.

The negative electrode material mixture may contain a resin binder. The negative electrode material mixture does not necessarily need to contain a binder as long as favorable moldability can be ensured without using a binder, such as when the negative electrode also contains a sulfide-based solid electrolyte. As the resin binder, a fluorine resin such as polyvinylidene fluoride (PVDF) may be used. However, the resin binder also acts as a resistance component in the negative electrode material mixture, and it is therefore desirable that the amount of the resin binder is as small as possible. Accordingly, in the case where a resin binder is necessary in the negative electrode material mixture, the amount of the resin binder is preferably 5 mass% or less and 0.5 mass% or more. On the other hand, in the case where a resin binder is not necessary in the negative electrode material mixture from the viewpoint of moldability, the amount of the resin binder is preferably 0.5 mass% or less, more preferably 0.3 mass% or less, and even more preferably 0 mass% (or in other words, no resin binder is contained).

In the case where a current collector is used in the negative electrode for a non-aqueous electrolyte secondary battery, as the current collector, a foil, a punched metal, a mesh, an expanded metal, a foamed metal that are made of a metal such as copper or nickel; a carbon sheet, or the like can be used.

The molded body of the negative electrode material mixture can be formed by compressing, through pressure molding or the like, a negative electrode material mixture prepared by mixing, for example, a negative electrode active material, a conductive aid, and optionally a solid electrolyte, a binder, and the like. In the case where the negative electrode for a non-aqueous electrolyte secondary battery is made using only the molded body of the negative electrode material mixture, the molded body of the negative electrode material mixture can be produced using the above-described method.

In the case where the negative electrode for a non-aqueous electrolyte secondary battery includes a current collector, the negative electrode can be produced by attaching the molded body of the negative electrode material mixture formed using the method described above to the current collector through pressing or the like.

In the case where the negative electrode for a non-aqueous electrolyte secondary battery includes a current collector, the negative electrode can also be produced by applying, to the current collector, a negative electrode material mixture-containing composition (in the form of a paste, a slurry, or the like) prepared by dispersing a negative electrode active material, a conductive aid, and optionally a solid electrolyte, a binder, and the like in a solvent, and subjecting the current collector to which the negative electrode material mixture-containing composition has been applied to drying and optionally pressure molding such as calender processing to form the molded body of the negative electrode material mixture (negative electrode material mixture layer) on the surface of the current collector.

As the solvent of the negative electrode material mixture-containing composition, water or an organic solvent such as N-methyl-2-pyrrolidone (NMP) can be used. In the case where the negative electrode material mixture-containing composition also contains a solid electrolyte, it is preferable to select a solvent that is unlikely to deteriorate the solid electrolyte. In particular, a sulfide-based solid electrolyte and a hydride-based solid electrolyte chemically react with a very small amount of moisture, and it is therefore preferable to use a nonpolar aprotic solvent as typified by a hydrocarbon solvent such as hexane, heptane, octane, nonane, decane, decalin, toluene, or xylene. In particular, it is more preferable to use a super dehydrated solvent with a moisture content of 0.001 mass% (10 ppm) or less. It is also possible to use fluorine-based solvents such as Vertrel (registered trademark) available from Mitsui DuPont Fluorochemicals Co., Ltd., Zeorora (registered trademark) available from Zeon Corporation, and Novec (registered trademark) available from Sumitomo 3M Ltd., and non-aqueous organic solvents such as dichloromethane and diethyl ether.

Usually, long CNTs contained in the negative electrode material mixture are cut to a shorter length during production of the negative electrode for a non-aqueous electrolyte secondary battery (mainly when mixing the negative electrode material mixture). Accordingly, when producing the negative electrode for a non-aqueous electrolyte secondary battery, it is desirable to adjust the aspect ratio (fiber length) of the CNTs to satisfy a value within the above-described range by adjusting the conditions in each step of the production process.

The thickness of the molded body of the negative electrode material mixture (in the case where the negative electrode includes a current collector, the thickness of the molded body of the negative electrode material mixture provided on one side of the current collector, and the same applies hereinafter) is preferably 200 µm or more from the viewpoint of achieving a high capacity battery. Generally speaking, the load characteristics of a battery can be easily improved by reducing the thickness of the positive electrode and the thickness of the negative electrode. However, according to the present invention, even when the molded body of the negative electrode material mixture is as thick as 200 µm or more, the load characteristics of the battery can be enhanced. Accordingly, in the present invention, the above-described advantageous effect becomes more prominent when the thickness of the molded body of the negative electrode material mixture is, for example, 200 µm or more. Also, the thickness of the molded body of the negative electrode material mixture is usually 3000 µm or less.

In the case where the negative electrode for a non-aqueous electrolyte secondary battery is produced by forming a negative electrode material mixture layer on a current collector using a negative electrode material mixture-containing composition that contains a solvent, the thickness of the negative electrode material mixture layer is preferably 50 to 1000 µm.

### Non-Aqueous Electrolyte Secondary Battery

The non-aqueous electrolyte secondary battery according to the present invention is a non-aqueous electrolyte secondary battery that includes a positive electrode and a negative electrode, wherein the negative electrode for a non-aqueous electrolyte secondary battery according to the present invention is used as the negative electrode.

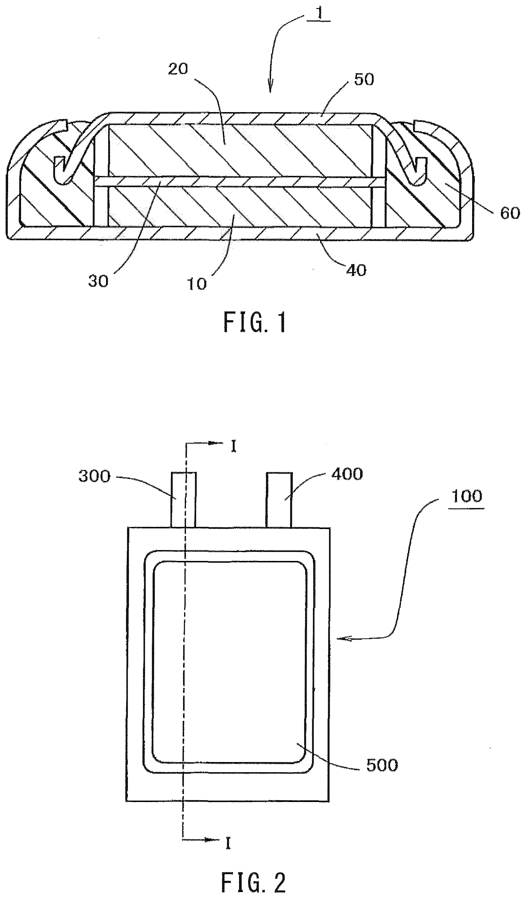

A schematic cross-sectional view showing an example of a non-aqueous electrolyte secondary battery according to the present invention is shown in FIG. 1. A non-aqueous electrolyte secondary battery 1 shown in FIG. 1 is obtained by housing a positive electrode 10, a negative electrode 20, a separator 30 (a solid electrolyte layer 30 in the case of the non-aqueous electrolyte secondary battery of the present invention being an all-solid-state secondary battery) interposed between the positive electrode 10 and the negative electrode 20, and a non-aqueous electrolyte (in the case of the non-aqueous electrolyte secondary battery of the present invention being a non-aqueous electrolyte secondary battery other than an all-solid-state secondary battery) in an exterior body formed using an exterior can 40, a sealing can 50, and a resin gasket 60 interposed between the exterior can 40 and the sealing can 50.

The sealing can 50 has a structure in which the interior of the battery is hermetically sealed as a result of the sealing can 50 being fitted to the opening of the exterior can 40 via the gasket 60, and the opening end portion of the exterior can 40 being inwardly fastened to cause the gasket 60 to abut against the sealing can 50 and the opening of the exterior can 40 to be sealed.

As the exterior can and the sealing can, stainless steel cans or the like can be used. Also, as the material of the gasket, polypropylene, nylon, or the like can be used. In the case where the battery is used in applications where heat resistance is required, it is also possible to use a heat resistant resin with a melting point above 240°C such as a fluorine resin such as tetrafluoroethylene-perfluoroalkoxy ethylene copolymer (PFA); polyphenylene ether (PEE), polysulfone (PSF), polyarylate (PAR), polyethersulfone (PES), polyphenylenesulfide (PPS), or polyether ether ketone (PEEK). Also, in the case where the battery is used in applications where heat resistance is required, the battery can be sealed through glass hermetic sealing.

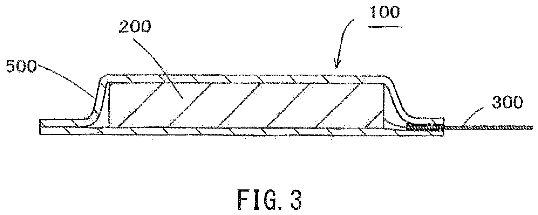

FIGS. 2 and 3 schematically show another example of a non-aqueous electrolyte secondary battery according to the present invention. FIG. 2 is a plan view of a non-aqueous electrolyte secondary battery, and FIG. 3 is a cross-sectional view taken along the line I-I shown in FIG. 2.

A non-aqueous electrolyte secondary battery 100 shown in FIGS. 2 and 3 houses an electrode assembly 200 in a laminate film exterior body 500 that is made using two metal laminate films, and the laminate film exterior body 500 is sealed by heat-sealing upper and lower metal laminate films at the outer circumferential portions thereof.

In the case where the non-aqueous electrolyte secondary battery 100 is an all-solid-state secondary battery, the electrode assembly 200 is formed by stacking a positive electrode, the negative electrode for a non-aqueous electrolyte secondary battery according to the present invention, and a solid electrolyte layer interposed between the positive electrode and the negative electrode. On the other hand, in the case where the non-aqueous electrolyte secondary battery 100 is a non-aqueous electrolyte secondary battery other than an all-solid-state secondary battery, the electrode assembly 200 is formed by stacking a positive electrode, the negative electrode for a non-aqueous electrolyte secondary battery according to the present invention, and a separator interposed between the positive electrode and the negative electrode, and the electrode assembly 200 is housed in the laminate film exterior body 500 together with a non-aqueous electrolyte.

In FIG. 3, in order to avoid a complex drawing, the layers that constitute the laminate film exterior body 500 and the structural elements (the positive electrode, the negative electrode, and the like) that constitute the electrode assembly 200 are not illustrated.

The positive electrode of the electrode assembly 200 is connected to a positive electrode external terminal 300 in the battery 100. Also, although not shown in the diagram, the negative electrode of the electrode assembly 200 is also connected to a negative electrode external terminal 400 in the battery 100. One end of the positive electrode external terminal 300 and one end of the negative electrode external terminal 400 are provided outside the laminate film exterior body 500 such that the positive electrode external terminal 300 and the negative electrode external terminal 400 can be connected to an external device or the like.

### Positive Electrode

As the positive electrode of the non-aqueous electrolyte secondary battery, for example, it is possible to use a molded body (a pellet or the like) obtained by molding a positive electrode material mixture that contains a positive electrode active material, a conductive aid, and the like, or a layer made of the molded body of the positive electrode material mixture (a positive electrode material mixture layer) formed on a current collector.

There is no particular limitation on the positive electrode active material as long as a conventionally known positive electrode active material for a non-aqueous electrolyte secondary battery, or in other words, an active material that can intercalate and deintercalate Li ions is used. Specific examples of the positive electrode active material include a spinel-type lithium manganese composite oxide represented by LiMₓMn₂₋ₓO₄, where M represents at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, and 0.01 ≤ x ≤ 0.5, a layered compound represented by LiₓMn_{(1-y-x)}Ni_{y}M_{z}O(₂₋ₖ)Fₗ, where M represents at least one element selected from the group consisting of Co, Mg, Al, B, Ti, V, Cr, Fe, Cu, Zn, Zr, Mo, Sn, Ca, Sr, and W, 0.8 ≤ x ≤ 1.2, 0 < y < 0.5, 0 ≤ z ≤ 0.5, k + l < 1, -0.1 ≤ k ≤ 0.2, and 0 ≤ l ≤ 0.1, a lithium cobalt composite oxide represented by LiCo₁₋ₓMₓO₂, where M represents at least one element selected from the group consisting of Al, Mg, Ti, Zr, Fe, Ni, Cu, Zn, Ga, Ge, Nb, Mo, Sn, Sb, and Ba, and 0 ≤ x ≤ 0.5, a lithium nickel composite oxide represented by LiNi₁₋ₓMₓO₂, where M represents at least one element selected from the group consisting of Al, Mg, Ti, Zr, Fe, Co, Cu, Zn, Ga, Ge, Nb, Mo, Sn, Sb, and Ba, and 0 ≤ x ≤ 0.5, an olivine-type composite oxide represented by LiM₁₋ₓNₓPO₄, where M represents at least one element selected from the group consisting of Fe, Mn, and Co, N represents at least one element selected from the group consisting of Al, Mg, Ti, Zr, Ni, Cu, Zn, Ga, Ge, Nb, Mo, Sn, Sb, and Ba, and 0 ≤ x ≤ 0.5, a lithium titanium composite oxide represented by Li₄Ti₅O₁₂, and the like. These may be used alone or in a combination of two or more.

In the case where the non-aqueous electrolyte secondary battery is an all-solid-state secondary battery, the average particle size of the positive electrode active material is preferably 1 µm or more, and more preferably 2 µm or more, and preferably 10 µm or less, and more preferably 8 µm or less. The positive electrode active material may be in the form of primary particles or secondary particles that are aggregates of primary particles. When a positive electrode active material with an average particle size within the above-described range is used, the interface between the positive electrode active material and the solid electrolyte contained in the positive electrode can be increased, and thus the load characteristics of the battery are further improved.

In the case where the non-aqueous electrolyte secondary battery is an all-solid-state secondary battery, it is preferable that the positive electrode active material has, on its surface, a reaction inhibiting layer for inhibiting a reaction with the solid electrolyte contained in the positive electrode.

When the positive electrode active material and the solid electrolyte come into direct contact with each other in the molded body of the positive electrode material mixture, the solid electrolyte is oxidized to form a resistance layer, which may reduce the ion conductivity of the molded body. By providing a reaction inhibiting layer for inhibiting a reaction with the solid electrolyte on the positive electrode active material surface to prevent the positive electrode active material and the solid electrolyte from coming into direct contact with each other, it is possible to suppress the reduction in the ion conductivity of the molded body caused by the oxidation of the solid electrolyte.

The reaction inhibiting layer may be formed using a material that is ion conductive and is capable of inhibiting a reaction between the positive electrode active material and the solid electrolyte. Examples of materials that can be used to form the reaction inhibiting layer include an oxide that contains Li and at least one element selected from the group consisting of Nb, P, B, Si, Ge, Ti, and Zr, and more specifically, an Nb-containing oxide such as LiNbOs, as well as Li₃PO₄, Li₃BO₃, Li₄SiO₄, Li4GeO₄, LiTiO₃, LiZrO₃, and the like. These oxides may be used alone or in a combination of two or more to form the reaction inhibiting layer. Furthermore, a plurality of oxides may be selected from among the above-listed oxides to form a composite compound. Among these oxides, it is preferable to use an Nb-containing oxide, and it is more preferable to use LiNbOs.

It is preferable that the reaction inhibiting layer is present on the positive electrode active material surface in an amount of 0. 1 to 1.0 parts by mass relative to 100 parts by mass of the positive electrode active material. When the amount of the reaction inhibiting layer is within this range, it is possible to favorably inhibit a reaction between the positive electrode active material and the solid electrolyte.

The reaction inhibiting layer is formed on the positive electrode active material surface using a method such as a sol gel method, a mechanofusion method, a CVD method, or a PVD method.

The amount of the positive electrode active material in the positive electrode material mixture is preferably 60 to 95 mass%.

Examples of the conductive aid used in the positive electrode include carbon materials such as graphite (including a natural graphite and an artificial graphite), graphene, carbon black, carbon nanofibers, and carbon nanotubes. The amount of the conductive aid in the positive electrode material mixture is preferably 1 to 10 mass%.

In the case where the non-aqueous electrolyte secondary battery is an all-solid-state secondary battery, a solid electrolyte is contained in the positive electrode material mixture.

As the solid electrolyte used in the positive electrode, it is possible to use any one or two or more of various types of sulfide-based solid electrolytes, hydride-based solid electrolytes, and oxide-based solid electrolytes listed above as examples of the solid electrolyte that can be used in the negative electrode. In order to achieve more excellent battery characteristics, it is desirable that the solid electrolyte contains a sulfide-based solid electrolyte, and it is more desirable that the solid electrolyte contains an argyrodite-type sulfide-based solid electrolyte.

The amount of the solid electrolyte in the positive electrode material mixture is preferably 4 to 30 mass%.

The positive electrode material mixture may contain a resin binder. The positive electrode material mixture does not necessarily need to contain a binder as long as favorable moldability can be ensured without using a binder, such as when the positive electrode also contains a sulfide-based solid electrolyte. As the resin binder, a fluorine resin such as polyvinylidene fluoride (PVDF) may be used. However, the resin binder also acts as a resistance component in the positive electrode material mixture, and it is therefore desirable that the amount of the resin binder is as small as possible. Accordingly, in the case where a resin binder is necessary in the positive electrode material mixture, the amount of the resin binder is preferably 5 mass% or less and 0.5 mass% or more. On the other hand, in the case where a resin binder is not necessary in the positive electrode material mixture from the viewpoint of moldability, the amount of the resin binder is preferably 0.5 mass% or less, more preferably 0.3 mass% or less, and even more preferably 0 mass% (or in other words, no resin binder is contained).

In the case where a current collector is used in the positive electrode, as the current collector, a foil, a punched metal, a mesh, an expanded metal, a foamed metal that are made of a metal such as aluminum or stainless steel; a carbon sheet, or the like can be used.

The molded body of the positive electrode material mixture can be formed by compressing, through pressure molding or the like, a positive electrode material mixture prepared by mixing, for example, a positive electrode active material, a conductive aid, and optionally a solid electrolyte, a binder, and the like. In the case where the positive electrode is made using only the molded body of the positive electrode material mixture, the molded body of the positive electrode material mixture can be produced using the above-described method.

In the case where the positive electrode includes a current collector, the positive electrode can be produced by attaching the molded body of the positive electrode material mixture formed using the method described above to the current collector through pressing or the like.

Also, in the case where the positive electrode includes a current collector, the positive electrode can also be produced by applying, to the current collector, a positive electrode material mixture-containing composition (in the form of a paste, a slurry, or the like) prepared by dispersing a positive electrode active material, a conductive aid, and optionally a solid electrolyte, a binder, and the like in a solvent, and subjecting the current collector to which the positive electrode material mixture-containing composition has been applied to drying and optionally pressure molding such as calender processing to form the molded body of the positive electrode material mixture (positive electrode material mixture layer) on the current collector surface.

As the solvent of the positive electrode material mixture-containing composition, an organic solvent such as NMP can be used. In the case where the positive electrode material mixture-containing composition also contains a solid electrolyte, it is desirable to select a solvent that is unlikely to deteriorate the solid electrolyte, and it is preferable to use any of various types of solvents listed above as examples of the solvent of the negative electrode material mixture-containing composition that contains a solid electrolyte.

The thickness of the molded body of the positive electrode material mixture (in the case where the negative electrode includes a current collector, the thickness of the molded body of the positive electrode material mixture provided on one side of the current collector, and the same applies hereinafter) is preferably 200 µm or more from the viewpoint of achieving a high capacity battery. Also, the thickness of the molded body of the positive electrode material mixture is usually 2000 µm or less.

In the case where the positive electrode is produced by forming a positive electrode material mixture layer on a current collector using a positive electrode material mixture-containing composition that contains a solvent, the thickness of the positive electrode material mixture layer is preferably 50 to 1000 µm.

### Solid Electrolyte Layer

In the case where the non-aqueous electrolyte secondary battery is an all-solid-state secondary battery, as the solid electrolyte contained in the solid electrolyte layer that is interposed between the positive electrode and the negative electrode, it is possible to use any one or two or more of various types of sulfide-based solid electrolytes, hydride-based solid electrolytes, and oxide-based solid electrolytes listed above as examples of the solid electrolyte that can be used in the negative electrode for a non-aqueous electrolyte secondary battery. However, in order to achieve more excellent battery characteristics, it is desirable that the solid electrolyte contains a sulfide-based solid electrolyte, and it is more desirable that the solid electrolyte contains an argyrodite-type sulfide-based solid electrolyte. It is even more desirable that all of the positive electrode, the negative electrode, and the solid electrolyte layer contain a sulfide-based solid electrolyte, and yet even more preferably an argyrodite-type sulfide-based solid electrolyte.

The solid electrolyte layer may include a porous body such as a resin non-woven fabric as a support.

The solid electrolyte layer can be formed using any of the following methods: a method in which a solid electrolyte is compressed through pressure molding or the like; and a method in which a solid electrolyte layer forming composition prepared by dispersing a solid electrolyte in a solvent is applied to a substrate, a positive electrode, and a negative electrode, followed by drying and optionally pressure molding such as pressing.

As the solvent used in the solid electrolyte layer forming composition, it is desirable to select a solvent that is unlikely to deteriorate the solid electrolyte. It is preferable to use any of various types of solvents listed above as examples of the solvent of the negative electrode material mixture-containing composition that contains a solid electrolyte.

The thickness of the solid electrolyte layer is preferably 100 to 300 µm.

### Separator

In the case where the non-aqueous electrolyte secondary battery is a battery other than an all-solid-state secondary battery, as the separator interposed between the positive electrode and the negative electrode, a separator that has a sufficient strength and is capable of retaining a large amount of non-aqueous electrolyte is used. From this viewpoint, it is preferable to use a microporous film, a nonwoven fabric, or the like that has a thickness of 10 to 50 um and a porosity of 30 to 70%, and contains polyethylene, polypropylene, or an ethylene-propylene copolymer.

### Non-Aqueous Electrolyte

In the case where the non-aqueous electrolyte secondary battery is a battery other than an all-solid-state secondary battery, as the non-aqueous electrolyte, usually, a non-aqueous liquid electrolyte (hereinafter also referred to as "electrolyte solution") is used. As the electrolyte solution, an electrolyte solution obtained by dissolving an electrolyte salt such as a lithium salt in an organic solvent is used. There is no particular limitation on the organic solvent. However, examples of the organic solvent include: linear esters such as dimethyl carbonate, diethyl carbonate, ethyl methyl carbonate, and methyl propyl carbonate; cyclic esters that have a high dielectric constant such as ethylene carbonate, propylene carbonate, butylene carbonate, and vinylene carbonate; a solvent mixture of a linear ester and a cyclic ester; and the like. In particular, a solvent mixture that contains a linear ester as the main solvent and a cyclic ester is suitably used.

Examples of the electrolyte salt dissolved in an organic solvent to prepare the electrolyte solution include LiPF₆, LiBF₄, LiAsF₆, LiSbF₆, LiCF₃SO₃, LiC₄F₉SO₃, LiCF₃CO₂, Li₂C₂F₄(SO₃)₂, LiCₙF₂ₙ₊₁SO₃, where n ≥ 2, LiN(RfSO₂)(Rf'SO₂), LiC(RfSO₂)₃, and LiN(RfOSO₂)₂, where Rf and Rf' each represent a fluoroalkyl group. These can be used alone or in a combination of two or more. There is no particular limitation on the concentration of the electrolyte salt in the electrolyte solution. However, the concentration of the electrolyte salt is preferably 0.3 mol/l or more, and more preferably 0.4 mol/l or more, and preferably 1.7 mol/l or less, and more preferably 1.5 mol/l or less.

In the non-aqueous electrolyte secondary battery according to the present invention, as the non-aqueous electrolyte, it is possible to use, other than the electrolyte solution described above, a gel electrolyte obtained by gelling the electrolyte solution using a gelling agent made of a polymer or the like.

### Electrode Assembly

The positive electrode and the negative electrode can be used in the battery in the form of a stacked electrode assembly obtained by stacking the positive electrode and the negative electrode with a solid electrolyte layer or a separator interposed therebetween, or in the form of a wound electrode assembly obtained by spirally winding the stacked electrode assembly.

When forming an electrode assembly that includes a solid electrolyte layer, it is preferable to pressure mold a stack in which the positive electrode, the negative electrode, and the solid electrolyte layer are stacked, from the viewpoint of increasing the mechanical strength of the electrode assembly.

### Battery Configuration

The non-aqueous electrolyte secondary battery may have an exterior body composed of an exterior can, a sealing can, and a gasket as shown in FIG. 1. In other words, the non-aqueous electrolyte secondary battery may be configured as an ordinary coin-type or button-type battery. Alternatively, the non-aqueous electrolyte secondary battery may have, other than the exterior body as shown in FIGS. 2 and 3 that is made using resin films or metalresin laminate films, an exterior body that includes an exterior can that is made of a metal and has a bottomed tubular shape (a cylindrical or prismatic shape) and a sealing structure that seals the opening of the exterior can.

### Examples

Hereinafter, the present invention will be described in detail based on examples. However, the examples given below are not intended to limit the scope of the present invention.

### Example 1

### Production of Negative Electrode Using Negative Electrode Material Mixture Molded Body

Hard carbon (HC), CNTs (with a fiber diameter of 10 nm and a fiber length of 2 mm), graphene, and a sulfide-based solid electrolyte (Li₆PS₅Cl) were mixed at a mass ratio of 20:1.5:9.5:69, and the mixture was kneaded well to prepare a negative electrode material mixture (1). Next, 80 mg of the negative electrode material mixture (1) was placed in a powder compacting mold with a diameter of 10 mm, and subjected to pressure molding in which the negative electrode material mixture (1) was pressed at room temperature and a pressure of 4 t/cm² for 5 minutes using a pressing machine. In this way, a negative electrode composed of a negative electrode material mixture molded body was produced.

The fiber diameter, the fiber length, and the aspect ratio of the CNTs determined based on the methods described above using a portion of the negative electrode were 10 nm, 200 µm, and 20000, respectively.

### Production of Model Cell

### Formation of Solid Electrolyte Layer

80 mg of a sulfide-based solid electrolyte (Li₆PS₅Cl) was placed in a powder compacting mold with a diameter of 10 mm, and subjected to pressure molding using a pressing machine to form a solid electrolyte layer.

### Production of Negative Electrode

15 mg of the negative electrode material mixture (1) was placed on the solid electrolyte layer in the powder compacting mold, and subjected to pressure molding using a pressing machine to form a negative electrode made of a negative electrode material mixture molded body on the solid electrolyte layer.

### Formation of Stacked Electrode Assembly

As a counter electrode, an electrode obtained by molding Li metal and In metal into cylindrical bodies and attaching the cylindrical bodies together was used. The counter electrode was placed on a side of the solid electrolyte layer in the powder compacting mold that was opposite to the negative electrode, and subjected to pressure molding using a pressing machine to produce a stacked electrode assembly.

### Assembly of Model Cell

An all-solid-state battery (model cell) with the same planar structure as that shown in FIG. 2 was produced using the stacked electrode assembly produced above. A negative electrode current collecting foil (SUS foil) and a counter electrode current collecting foil (SUS foil) were arranged side by side with a spacing interposed therebetween and attached to an inner side of an aluminum laminate film constituting a laminate film exterior body. As each of the current collecting foils, a current collecting foil obtained by cutting into a shape having a main body portion provided opposing the negative electrode-side surface or the counter electrode-side surface of the stacked electrode assembly and portions serving as the negative electrode external terminal 400 and the counter electrode external terminal 300 protruding outward of the battery from the main body portion was used.

A model cell was obtained by placing the stacked electrode assembly on the negative electrode current collecting foil of the laminate film exterior body, wrapping the stacked electrode assembly with the laminate film exterior body such that the counter electrode current collecting foil was disposed on the counter electrode of the stacked electrode assembly, and sealing the remaining three sides of the laminate film exterior body through heat-sealing under vacuum.

### Comparative Example 1

A negative electrode material mixture (2) was prepared in the same manner as in Example 1, except that HC, graphene, and a solid electrolyte were used at a mass ratio of 20:11:69 without using CNTs, and a negative electrode composed of a negative electrode material mixture molded body was produced in the same manner as in Example 1, except that the negative electrode material mixture (2) was used. Also, a model cell was produced in the same manner as in Example 1, except that the negative electrode material mixture (2) was used.

### Comparative Example 2

A negative electrode material mixture (3) was prepared in the same manner as in Example 1, except that the CNTs were replaced by CNTs with a fiber diameter of 2 nm and a fiber length of 9.5 µm, and a negative electrode composed of a negative electrode material mixture molded body was produced in the same manner as in Example 1, except that the negative electrode material mixture (3) was used. A portion of the obtained negative electrode was used to determine the fiber diameter, the fiber length, and the aspect ratio of the CNTs based on the methods described above, and it was found that the fiber diameter, the fiber length, and the aspect ratio were 2 nm, 9.0 µm, and 4500, respectively.

Also, a model cell was produced in the same manner as in Example 1, except that the negative electrode material mixture (3) was used.

### Comparative Example 3

A negative electrode material mixture (4) was prepared in the same manner as in Example 1, except that the CNTs were replaced by CNTs with a fiber diameter of 13 nm and a fiber length of 24 µm, and a negative electrode composed of a negative electrode material mixture molded body was produced in the same manner as in Example 1, except that the negative electrode material mixture (4) was used. A portion of the obtained negative electrode was used to determine the fiber diameter, the fiber length, and the aspect ratio of the CNTs based on the methods described above, and it was found that the fiber diameter, the fiber length, and the aspect ratio were 13 nm, 19.6 µm, and 1500, respectively.

Also, a model cell was produced in the same manner as in Example 1, except that the negative electrode material mixture (4) was used.

### Comparative Example 4

A negative electrode material mixture (5) was prepared in the same manner as in Example 1, except that the CNTs were replaced by vapor-grown carbon fibers (with a fiber diameter of 150 nm and a fiber length of 10 µm), and a negative electrode composed of a negative electrode material mixture molded body was produced in the same manner as in Example 1, except that the negative electrode material mixture (5) was used. A portion of the obtained negative electrode was used to determine the fiber diameter, the fiber length, and the aspect ratio of the vapor-grown carbon fibers based on the same methods as in the case of CNTs, and it was found that the fiber diameter, the fiber length, and the aspect ratio were 150 nm, 8.9 µm, and 60, respectively.

Also, a model cell was produced in the same manner as in Example 1, except that the negative electrode material mixture (5) was used.

The negative electrodes produced in Example 1 and Comparative Examples 1 to 4, as well as the model cells produced using these negative electrodes were subjected to the following evaluation tests.

### CC Capacity Evaluation

For each model cell, a series of operations of constant current charging at a temperature of 23°C under pressure (1 t/cm²) at a current value of 0.5 C to a voltage of -0.62 V, constant voltage charging at a voltage of -0.62 V to a current value of 0.01 C, and discharging at a current value of 0.1 C to a voltage of 1.88 V was performed twice. Then, the capacity after the second constant current charging and the capacity after the second discharging (initial capacity) were determined, and a value obtained by dividing the capacity after the second constant current charging by the initial capacity was expressed in percentage to evaluate the CC capacity (0.5 C capacity).

Also, for each model cell, a series of operations of constant current charging, constant voltage charging, and discharging under the same conditions as the 0.5 C capacity measurement was repeated twice, except that the current value during constant current charging and the current value during discharging were changed to 1.0 C. Then, the capacity after the second constant current charging and the capacity after the second discharging (initial capacity) were determined, and a value obtained by dividing the capacity after the second constant current charging by the initial capacity was expressed in percentage to evaluate the CC capacity (1.0 C capacity).

It can be said that the larger the CC capacity values (0.5 C capacity and 1.0 C capacity), the more excellent the charging load characteristics of the negative electrode used in the model cell.

### Measurement of Strength of Negative Electrode

Each of the negative electrodes produced in Example and Comparative Examples (the negative electrodes each composed of a negative electrode material mixture molded body) was subjected to strength measurement using a force gauge (Digital Force Gauge ZTS-500N available from Imada Co., Ltd.). Each negative electrode was placed on a stage, with a flat surface of the negative electrode facing upward, and a stress was applied in the thickness direction of the negative electrode from the flat surface using the force gauge to read, from the force gauge, a load (kgf) at which the negative electrode was broken, and the read value was defined as the negative electrode strength. The negative electrode strength of each negative electrode was evaluated based on a relative value when the negative electrode strength of Comparative Example 1 was set to 100 (%).

The fiber diameter and the aspect ratio of CNTs of the negative electrode, as well as the amount of CNTs of the negative electrode in the negative electrode material mixture are shown in Table 1, and the evaluation results are shown in Table 2. To facilitate comparison, in Table 1, the values of the negative electrode of Comparative Example 4 that was produced using vapor-grown carbon fibers instead of CNTs are shown in parentheses.

**[Table 1]**

| | CNTs of negative electrode | | | |
|---|---|---|---|---|
| | Fiber diameter (nn) | Fiber length (µm) | Aspect ratio | Amount (mass%) |
| Example 1 | 10 | 200 | 20000 | 1.5 |
| Comparative Example 1 | - | - | - | 0 |
| Comparative Example 2 | 2 | 9.0 | 4500 | 1.5 |
| Comparative Example 3 | 13 | 19.6 | 1500 | 1.5 |
| Comparative Example 4 | (150) | (8.9) | (60) | (1.5) |

**[Table 2]**

| | Negative electrode strength (%) | CC capacity | |
|---|---|---|---|
| | | 0.5 C | 1.0 C |
| Example 1 | 137 | 62 | 45 |
| Comparative Example 1 | 100 | 61 | 33 |
| Comparative Example 2 | 129 | 57 | 39 |
| Comparative Example 3 | 119 | 52 | 34 |
| Comparative Example 4 | 110 | 46 | 34 |

As shown in Tables 1 and 2, the model cell produced in Example 1 using a negative electrode containing CNTs with an appropriate fiber diameter and an appropriate aspect ratio exhibited larger CC capacity values as compared with the model cell produced in Comparative Example 1 using a negative electrode containing no CNTs. Accordingly, it can be said that the negative electrode had excellent charging load characteristics. Also, the negative electrode of Example 1 exhibited a higher strength than that of the negative electrode of Comparative Example 1.

On the other hand, the model cells produced in Comparative Examples 2 and 3 using negative electrodes containing CNTs with an inappropriate aspect ratio and the model cell produced in Comparative Example 4 using a negative electrode that was produced using vapor-grown carbon fibers instead of CNTs exhibited small CC capacity values, and the charging load characteristics of these negative electrodes were lower than those of the negative electrode of Example 1.

### Example 2

A negative electrode material mixture (6) was prepared in the same manner as in Example 1, except that the mass ratio of HC, CNTs, graphene, and the solid electrolyte was changed to 20:0.5:10.5:69, and a negative electrode composed of a negative electrode material mixture molded body was produced in the same manner as in Example 1, except that the negative electrode material mixture (6) was used. A portion of the obtained negative electrode was used to determine the fiber diameter, the fiber length, and the aspect ratio of the CNTs based on the methods described above, and it was found that the fiber diameter, the fiber length, and the aspect ratio were 10 nm, 200 µm, and 20000, respectively.

Also, a model cell was produced in the same manner as in Example 1, except that the negative electrode material mixture (6) was used.

### Example 3

A negative electrode material mixture (7) was prepared in the same manner as in Example 1, except that the mass ratio of HC, CNTs, graphene, and the solid electrolyte was changed to 20:1:10:69, and a negative electrode composed of a negative electrode material mixture molded body was produced in the same manner as in Example 1, except that the negative electrode material mixture (7) was used. A portion of the obtained negative electrode was used to determine the fiber diameter, the fiber length, and the aspect ratio of the CNTs based on the methods described above, and it was found that the fiber diameter, the fiber length, and the aspect ratio were 10 nm, 200 µm, and 20000, respectively.

Also, a model cell was produced in the same manner as in Example 1, except that the negative electrode material mixture (7) was used.

### Example 4

A negative electrode material mixture (8) was prepared in the same manner as in Example 1, except that the mass ratio of HC, CNTs, graphene, and the solid electrolyte was changed to 20:2:9:69, and a negative electrode composed of a negative electrode material mixture molded body was produced in the same manner as in Example 1, except that the negative electrode material mixture (8) was used. A portion of the obtained negative electrode was used to determine the fiber diameter, the fiber length, and the aspect ratio of the CNTs based on the methods described above, and it was found that the fiber diameter, the fiber length, and the aspect ratio were 10 nm, 200 µm, and 20000, respectively.

Also, a model cell was produced in the same manner as in Example 1, except that the negative electrode material mixture (8) was used.

The negative electrodes produced in Examples 2 to 4, as well as the model cells produced using these negative electrodes were subjected to the same CC capacity measurement and negative electrode strength measurement as in Example 1 and the like. The fiber diameter and the aspect ratio of CNTs of each of the negative electrodes of Examples 2 to 4, as well as the amount of CNTs of each of the negative electrodes of Examples 2 to 4 in the negative electrode material mixture are shown in Table 3, and the evaluation results are shown in Table 4. In Tables 3 and 4, the values of the negative electrodes of Example 1 and Comparative Example 1 are also shown.

**[Table 3]**

| | CNTs of negative electrode | | | |
|---|---|---|---|---|
| | Fiber diameter (nm) | Fiber length (µm) | Aspect ratio | Amount (mass%) |
| Example 1 | 10 | 200 | 20000 | 1.5 |
| Example 2 | 10 | 200 | 20000 | 0.5 |
| Example 3 | 10 | 200 | 20000 | 1.0 |
| Example 4 | 10 | 200 | 20000 | 2.0 |
| Comparative Example 1 | - | - | - | 0 |

**[Table 4]**

| | Negative electrode strength (%) | CC capacity | |
|---|---|---|---|
| | | 0.5 C | 1.0 C |
| Example 1 | 137 | 62 | 45 |
| Example 2 | 109 | 63 | 41 |
| Example 3 | 119 | 66 | 46 |
| Example 4 | 152 | 63 | 41 |
| Comparative Example 1 | 100 | 61 | 33 |

In the negative electrodes used in the model cells of Examples 1 to 4, the amount of CNTs with an appropriate fiber diameter and an appropriate aspect ratio in the negative electrode material mixture was changed. These model cells exhibited larger CC capacity values as compared with those of the model cell produced in Comparative Example 1 using a negative elected containing no CNTs. Accordingly, it can be said that the charging load characteristics of the negative electrodes of Examples 2 to 4 are also excellent as with the negative electrode of Example 1. Also, the negative electrodes of Examples 2 to 4 exhibited a higher strength than that of the negative electrode of Comparative Example 1, as with the negative electrode of Example 1.

The negative electrode strength of the negative electrodes of Comparative Examples 2 to 4 shown in Table 2 is greater than or equal to that of the negative electrodes of Examples 2 and 3 in which the amount of CNTs with an appropriate fiber diameter and an appropriate aspect ratio in the negative electrode material mixture was small. However, it is presumed that the CNTs used in the negative electrodes of Comparative Examples 2 and 3 had an inappropriate aspect ratio, and the negative electrode of Comparative Example 4 was produced using vapor-grown carbon fibers with an inappropriate fiber diameter and an inappropriate aspect ratio, and thus the model cells produced using these negative electrodes exhibited smaller CC capacity values as compared with those of the model cells produced using the negative electrodes of Examples 2 and 3 (the charging load characteristics of the negative electrodes of Comparative Examples 2 to 4 were lower than those of the negative electrodes of Examples 2 and 3).

The present invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

The non-aqueous electrolyte secondary battery according to the present invention is applicable to the same applications as conventionally known secondary batteries and all-solid-state secondary batteries that contain non-aqueous electrolytes (a non-aqueous electrolyte solution and a gel electrolyte). Also, the negative electrode for a non-aqueous electrolyte secondary battery according to the present invention can constitute the non-aqueous electrolyte secondary battery according to the present invention.

### Description of Reference Numerals

- 1, 100: Non-aqueous electrolyte secondary battery
- 10: Positive electrode
- 20: Negative electrode
- 30: Solid electrolyte layer or separator
- 40: Exterior can
- 50: Sealing can
- 60: Gasket
- 200: Electrode assembly
- 300: Positive electrode external terminal
- 400: Negative electrode external terminal
- 500: Laminate film exterior body

## Claims

1. A negative electrode for a non-aqueous electrolyte secondary battery comprising a negative electrode active material and a conductive aid,
wherein the negative electrode contains carbon nanotubes that have a fiber diameter of 0.8 to 20 nm and an aspect ratio of 5000 or more as the conductive aid.

2. The negative electrode for a non-aqueous electrolyte secondary battery according to claim 1, comprising a molded body obtained by molding a negative electrode material mixture that contains the negative electrode active material and the conductive aid into a pellet.

3. The negative electrode for a non-aqueous electrolyte secondary battery according to claim 1 or 2, comprising hard carbon as the negative electrode active material.

4. The negative electrode for a non-aqueous electrolyte secondary battery according to any one of claims 1 to 3, further comprising a solid electrolyte,
wherein the negative electrode is used in an all-solid-state secondary battery.

5. The negative electrode for a non-aqueous electrolyte secondary battery according to claim 4,
wherein the solid electrolyte is a sulfide-based solid electrolyte.

6. A non-aqueous electrolyte secondary battery comprising a positive electrode and a negative electrode,
wherein the non-aqueous electrolyte secondary battery includes the negative electrode for a non-aqueous electrolyte secondary battery according to any one of claims 1 to 5 as the negative electrode.

7. The non-aqueous electrolyte secondary battery according to claim 6,
wherein the non-aqueous electrolyte secondary battery is an all-solid-state secondary battery including a solid electrolyte layer between the positive electrode and the negative electrode,
wherein the negative electrode is the negative electrode for a non-aqueous electrolyte secondary battery according to claim 4 or 5.

8. The non-aqueous electrolyte secondary battery according to claim 7,
wherein the solid electrolyte layer contains a sulfide-based solid electrolyte.
